# EUROPÄISCHE PATENTANMELDUNG

(11) **EP 0 668 192 A2**
(43) Veröffentlichungstag der Anmeldung: **23.08.1995**
(21) Anmeldenummer: 95200218.6
(22) Anmeldetag: 30.01.1995
(51) Int. Cl.: B60R 16/02

(54) **Vorrichtung zur Übertragung von Energie und Daten zwischen der Fahrzeug- und der Lenkradseite von Kraftfahrzeugen**

(30) Priorität: 16.02.1994 DE 4404816
(71) Anmelder: PARS Passive Rückhaltesysteme GmbH, 63755 Alzenau (DE); KS AUTOMOBIL-SICHERHEITSTECHNIK GmbH, D-63743 Aschaffenburg (DE)
(72) Erfinder: Fahrländer, Dieter, D-63755 Alzenau (DE); Tschöp, Winfried, D-97892 Kreuzwertheim (DE); Bossler, Hans Jürgen, D-64839 Münster (DE)
(74) Vertreter: Rieger, Harald, Dr.

(57) **Zusammenfassung**

Bei einer Vorrichtung zur drahtlosen Übertragung von Energie und Daten zwischen der Fahrzeug- (1) und der Lenkradseite (3) von Kraftfahrzeugen mittels eines Energie von der Fahrzeug- zur Lenkradseite und Daten bidirektional sendenden Übertragers (4) sind auf beiden Seiten des Übertragers den Ablauf der Übertragung steuernde und auswertende Schaltungsmittel angeordnet, die aus jeweils einem auf der Lenkrad- (3) und der Fahrzeugseite (1) befindlichen Micro-Controller (12,15) aufgebaut sind, der wenigstens fahrzeugseitig ein Interface-Modul (16) ansteuert und der mit dem Zündkreis (18) einer im Lenkrad (2) angebrachten Gassack-Aufprall-Schutzeinheit verbunden ist. Um auf die Anordnung einer besonderen Ansteuereinheit für den Zündkreis der Gassack-Aufprall-Schutzeinheit verzichten zu können, ist vorgesehen, daß ein Beschleunigungssensor (24) zum Auslösen des Zündkreises (18) mit einem auf der Fahrzeugseite (1) oder einem auf der Lenkradseite (3) angeordneten Micro-Controller (12,15) verbunden ist.

## Beschreibung

Die Erfindung betrifft eine Vorrichtung zur drahtlosen Übertragung von Energie und Daten zwischen der Fahrzeug- und der Lenkradseite von Kraftfahrzeugen mittels eines Energie von der Fahrzeug- zur Lenkradseite und Daten in beiden Richtungen sendenden Übertragers, vorzugsweise bestehend aus einer auf der Fahrzeugseite stationären und einer auf der Lenkradseite drehfest mit dem Lenkrad verbundenen Wicklung und auf beiden Seiten des Übertragers angeordneten, den Ablauf der Übertragung steuernden und auswertenden Schaltungsmitteln, aufgebaut aus jeweils einem auf der Lenkrad- und der Fahrzeugseite angebrachten, über ein Interface-Modul mit dem Übertrager verbundenen Micro-Controller, der wenigstens fahrzeugseitig ein aus einem auf geräteabhängiger Software basierenden Treiber oder ein aus einem auf einem speziellen Kommunikationsprogramm basierenden BUS, insbesondere CAN-BUS oder A-BUS, bestehendes Interface-Modul ansteuert und der über eine Ansteuerstufe mit dem Zündkreis der im Lenkrad untergebrachten Gassack-Aufprall-Schutzeinheit verbunden ist.

Üblicherweise wird Energie von der Fahrzeug- zur Lenkradseite eines Kraftfahrzeugs über ein stationäres, in der Regel am Lenkstock befestigtes Bauteil und im Lenkrad über Schleifkontakte oder über eine Wickelfeder übertragen. Mit einer derartigen Übertragungsvorrichtung lassen sich auch bidirektional Daten zwischen der Fahrzeug- und der Lenkradseite übertragen. Nachteilig wirken sich jedoch der Verschleiß der mechanischen Bauteile, die Erzeugung von Geräuschen, insbesondere bei der Drehbewegung des Lenkrads, und/oder die Empfindlichkeit gegenüber mechanischen Beschleunigungen aus.

Durch die DE-A-41 20 650 ist eine Vorrichtung zur Übertragung von elektrischer Energie und Daten in Kraftfahrzeugen bekannt, bei der die im Lenkrad benötigte Energie auf induktivem Wege über Spulen eines Übertragers übertragen wird. Die Primärspule wird durch einen Schalter angesteuert, so daß sich nach dem Einschalten magnetische Energie aufbaut, die nach dem Abschalten in der Sekundärspule entladen und zu einem Kondensator oder zu einem Verbraucher geführt wird. Die elektrische Energie wird lenkradseitig über eine Gleichrichterschaltung in eine Gleichspannung umgewandelt und durch die lenkradseitige Elektronik geregelt. Die Höhe der übertragenen Leistung wird durch das Verhältnis von Einschalt- und Ausschaltzeit des Schalters bestimmt. Im geregelten Betrieb wird nur so viel Energie übertragen, wie auf der Lenkradseite benötigt wird. Dies geschieht durch Hin- und Herschalten zwischen verschiedenen Pulsbreiten. Die Daten von der Lenkrad- zur Fahrzeugseite bzw. von der Fahrzeug- zur Lenkradseite werden über einen von der induktiven Energieübertragung unabhängigen Kondensator gesendet. Der Kondensator ist fahrzeug- und lenkradseitig an gleichartige Ansteuer- und Auswertschaltungen angeschlossen, da Daten in beiden Richtungen übertragen werden. Der Kondensator ist koaxial zum Übertrager angebracht.

Nach einer älteren europäischen Patentanmeldung Nr. 93 104 888.8 erfolgt die Übertragung der Daten in beiden Richtungen auf induktivem Wege mittels eines auf der Primärseite und auf der Sekundärseite je eine Wicklung aufweisenden Übertragers, durch den auch die Energie in einer Richtung gesendet wird. Die Datenübertragung von der Primär- auf die Sekundärseite wird durch eine kurze Unterbrechung einer primärseitigen Schaltstrecke während der Energiespeicherphase vorgenommen, während die Datenübertragung in umgekehrter Richtung durch einen sekundärseitigen Belastungsimpuls erfolgt.

Ein wesentlicher Nachteil der Vorrichtung zur Übertragung von elektrischem Strom und Daten in bidirektionaler Flußrichtung zwischen der Lenkrad- und der Fahrzeugseite eines Kraftfahrzeugs besteht darin, daß die Ansteuereinheit für die im Lenkrad angeordnete Gassack-Aufprall-Schutzeinheit, bestehend aus einem Beschleunigungssensor mit dem Filter für unnötige Signale, der Stromversorgung, dem Micro-Controller und dem Zündkreis mit dem Zündtransistor, dem Kondensator für eine Energiereserve und dem mechanischen Sensor, im Tunnel des Kraftfahrzeugs angeordnet ist und über ein entsprechendes Interface-Modul mit einem auf der Fahrzeugseite liegenden Micro-Controller in Verbindung steht.

Aufgabe der vorliegenden Erfindung ist es, die eingangs beschriebene Vorrichtung zur drahtlosen Übertragung von Energie und Daten zwischen der Fahrzeug- und der Lenkradseite von Kraftfahrzeugen so auszugestalten, daß auf die Anordnung einer besonderen Ansteuereinheit für den Zündkreis der im Lenkrad befindlichen Gassack-Aufprall-Schutzeinheit verzichtet werden kann.

Die Lösung dieser Aufgabe besteht in den Merkmalen des Anspruchs 1.

Eine weitere Ausgestaltung der Erfindung sieht vor, daß mittels des auf der Fahrzeug- und des auf der Lenkradseite angeordneten Micro-Controllers Zündkreise für weitere passive Rückhaltesysteme, wie z.B. eine Gassack-Aufprall-Schutzeinheit für den Beifahrer, in der Seitenstruktur des Fahrzeugs angebrachte Gassack-Aufprall-Schutzeinheiten gegen einen dynamischen Seitenaufprall, Gurtstraffer usw., ansteuerbar sind.

Eine vorzugsweise Ausbildung der Erfindung ist darin zu sehen, daß der auf der Lenkradseite angeordnete Micro-Controller über ein Keypad-Interface-Modul mit im Lenkrad angebrachten Funktionstasten, z.B. für die Bedienung der Hupe, Beleuchtung usw., verbunden ist.

Zum Betrieb der erfindungsgemäßen Vorrichtung ist ein Drehtransformator vorgesehen, der aus einem mit dem Lenkrad drehbeweglichen ringförmigen Kern mit U-Schnitt, einer an dem radial innenliegenden Schenkel des Kerns anliegenden Sekundärwicklung, einer in den Ringraum zwischen der Sekundärwicklung und dem radial außenliegenden Schenkel des U-förmigen Kerns eintauchenden Primärwicklung, die an einem kreisringförmigen, in die U-förmige Ausnehmung des Kerns eintauchenden fahrzeugfesten Ring befestigt ist, besteht.

Die Erfindung ist in der Zeichnung näher und beispielhaft erläutert. Es zeigen:

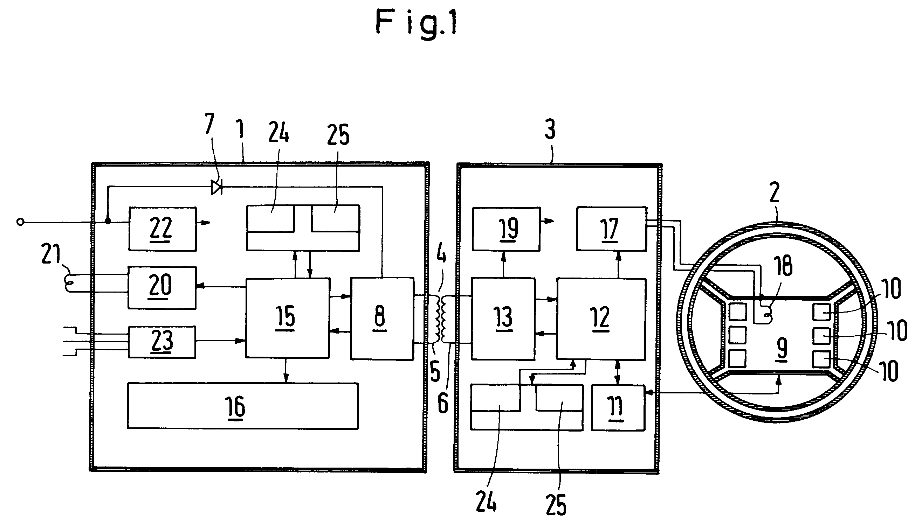

Fig. 1 eine Schaltungsanordnung und

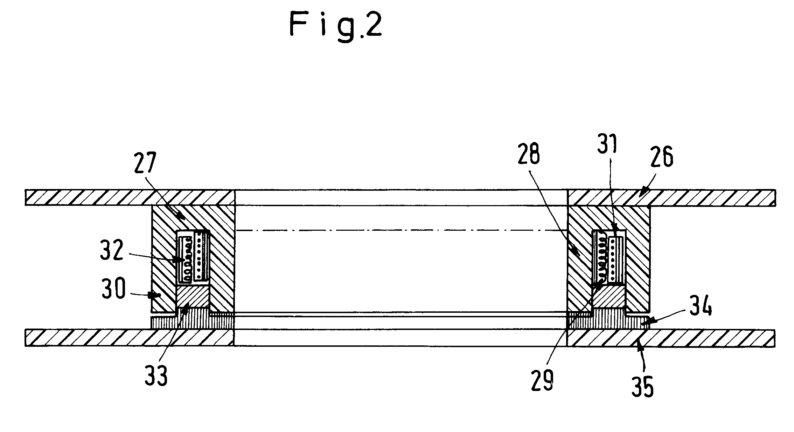

Fig. 2 einen Querschnitt durch den Drehtransformator.

Die Schaltungsanordnung besteht aus dem auf der Fahrzeugseite angeordneten, mit dem nicht dargestellten Lenkstock gestellfest verbundenen, elektrische Bausteine enthaltenden Gehäuse (1) und dem auf der Lenkradseite angeordneten, mit dem Lenkrad (2) drehfest verbundenen, elektrische Bausteine enthaltenden Gehäuse (3), wobei zwischen den Gehäusen (1) und (3) ein Übertrager (4) angeordnet ist, der fahrzeug- und lenkradseitig jeweils eine Spule (5) und (6) besitzt. Der Übertrager (4) trennt die im Gehäuse (1) untergebrachten elektrischen Bausteine von denjenigen des Gehäuses (3). Auf der Fahrzeugseite liegt eine Batteriespannung über eine Diode (7) an dem mit der fahrzeugseitigen Spule (5) verbundenen Interface-Modul (8) an. In der Prallplatte (9) des Lenkrads (2) befinden sich mehrere Tastschalter (10), deren Ausgänge über ein Keypad-Interface-Modul (11) und über einen Micro-Controller (12) auf das mit der Spule (6) verbundene Interface-Modul (13) gelegt sind. die Ausgänge des fahrzeugseitigen, mit der Spule (5) verbundenen Interface-Moduls (8) stehen über den fahrzeugseitigen Micro-Controller (15) mit einem aus einem auf einem speziellen Kommunikationsprogramm basierenden Treiber bzw. BUS bestehenden Interface-Modul (16) in Verbindung. Durch den lenkradseitig angeordneten Micro-Controller (12) ist die Zündausgangsstufe (17) für den Zündkreis (18) der im Lenkrad angeordneten Gassack-Aufprall-Schutzeinheit ansteuerbar. Das Interface-Modul (13) ist mit einem Spannungsregler (19) verbunden, der die lenkradseitige Elektronik, insbesondere den Micro-Controller (12), versorgt. Mittels des auf der Fahrzeugseite befindlichen Micro-Controllers (15) ist die Zündausgangsstufe (20) für den Zündkreis (21) der auf der Beifahrerseite angebrachten Gassack-Aufprall-Schutzeinheit ansteuerbar. Die Batteriespannung ist ebenfalls auf einen Spannungsregler (22) geführt, der die Versorgung der fahrzeugseitigen Elektronik vornimmt. Mittels der auf der Fahrzeugseite befindlichen Steuereinrichtung (23) ist der Micro-Controller (15) mit von peripheren Einheiten ausgehenden Signalen, wie Signale zum Anspannen der Gurte der Fahrzeuginsassen, ansteuerbar. Auf der Fahrzeug- oder auf der Lenkradseite ist ein den Micro-Controller (12, 15) ansteuernder Beschleunigungssensor (24), der mit einem Filter (25) für unnötige Signale verbunden ist, angebracht.

Eine vereinfachte Ausführungsform der Vorrichtung besteht darin, auf die in der Prallplatte (9) des Lenkrads (2) befindlichen Tastschalter (10) und damit auf das mit dem Micro-Controller (12) verbundene Keypad-Interface-Modul (11) zu verzichten.

Der als Drehtransformator ausgebildete Übertrager besteht aus einer mit dem Lenkrad (2) drehbeweglich verbundenen, kreisringförmigen Platine (26), an der ein aus Kunststoff-Ferrit-Compound bestehender ringförmiger Kern (27) mit U-Schnitt befestigt ist. An dem radial innenliegenden Schenkel (28) ist die Sekundärwicklung (29) des Übertragers befestigt. In den zwischen der Sekundärwicklung und dem radial außenliegenden Schenkel (30) bestehenden Ringraum (31) taucht die Primärwicklung (32) ein, die an einem kreisringförmigen, in die U-förmige Ausnehmung des Kerns (27) eintauchenden Ring (33) befestigt ist. Der Ring (33) ist über einen Zwischenring (34) an der fahrzeugfesten, kreisringförmigen Platine (35) angebracht.

## Patentansprüche

1. Vorrichtung zur drahtlosen Übertragung von Energie und Daten zwischen der Fahrzeug- (1) und der Lenkradseite (3) von Kraftfahrzeugen mittels eines Energie von der Fahrzeug- zur Lenkradseite und Daten in beiden Richtungen sendenden Übertragers (4), vorzugsweise bestehend aus einer auf der Fahrzeugseite stationären und einer auf der Lenkradseite drehfest mit dem Lenkrad (2) verbundenen Wicklung (5, 6) und auf beiden Seiten des Übertragers angeordneten, den Ablauf der Übertragung steuernden und auswertenden Schaltungsmitteln, aufgebaut aus jeweils einem auf der Lenkrad- und der Fahrzeugseite angebrachten, über ein Interface-Modul (8, 13) mit dem Übertrager verbundenen Micro-Controller (12, 15), der wenigstens fahrzeugseitig ein aus einem auf geräteabhängiger Software basierenden Treiber oder ein aus einem auf einem speziellen Kommunikationsprogramm basierenden BUS bestehendes Interface-Modul (16) ansteuert und der über eine Ansteuerstufe (17) mit dem Zündkreis (18) der im Lenkrad angebrachten Gassack-Aufprall-Schutzeinheit verbunden ist, dadurch gekennzeichnet, daß ein Beschleunigungssensor (21, 22) zum Auslösen des Zündkreises (18) der im Lenkrad (2) angeordneten Gassack-Aufprall-Schutzeinheit mit dem auf der Fahrzeugseite (1) oder dem auf der Lenkradseite (3) angeordneten Micro-Controller (12, 15) verbunden ist.

2. Vorrichtung nach Anspruch 1, dadurch gekennzeichnet, daß mittels des auf der Fahrzeug- (1) oder des auf der Lenkradseite (3) angeordneten Micro-Controllers weitere Zündkreise (21) für zusätzliche im Kraftfahrzeug angeordnete passive Rückhaltesysteme ansteuerbar sind.

3. Vorrichtung nach einem der Ansprüche 1 und 2, dadurch gekennzeichnet, daß der lenkradseitig angeordnete Micro-Controller (12) über ein Keypad-Interface-Modul (11) mit im Lenkrad (2) angeordneten Funktionstasten (10) verbunden ist.

4. Drehtransformator zum Betrieb der Vorrichtung nach einem der Ansprüche 1 bis 3, gekennzeichnet durch einen mit dem Lenkrad (2) drehbeweglich verbundenen ringförmigen Kern (27) mit U-Schnitt, eine an dem radial innenliegenden Schenkel (28) des Kerns befestigte Sekundärwicklung (29), eine in den Ringraum (31) zwischen der Sekundärwicklung und dem radial außenliegenden Schenkel (30) des Kerns eintauchende Primärwicklung (32), die an einem kreisringförmigen, in die U-förmige Ausnehmung des Kerns eintauchenden fahrzeugfesten Ring (33) befestigt ist.
